# EUROPÄISCHE PATENTSCHRIFT

(11) **EP 1 004 789 B1**
(45) Veröffentlichungstag und Bekanntmachung des Hinweises auf die Patenterteilung: **31.03.2004**
(21) Anmeldenummer: 99123404.8
(22) Anmeldetag: 24.11.1999
(51) Int. Cl.: F16D 65/12, C22C 37/00

(54) **Bremsscheibe für Nutzfahrzeuge**
Brake disc for utility vehicles
Disque de frein pour véhicules utilitaires

(30) Priorität: 26.11.1998 DE 19854600
(43) Veröffentlichungstag der Anmeldung: 31.05.2000
(73) Patentinhaber: Fritz Winter Eisengiesserei GmbH & Co. KG, 35254 Stadtallendorf (DE)
(72) Erfinder: Lampic-Opländer, Milan Dr., 35037 Marburg (DE)
(74) Vertreter: COHAUSZ & FLORACK

(56) Entgegenhaltungen:
- EP-A- 0 778 355
- US-A- 4 131 456
- US-A- 5 323 883
- PATENT ABSTRACTS OF JAPAN vol. 012, no. 117 (C-487), 13. April 1988 (1988-04-13) & JP 62 240745 A (YAMAHA MOTOR CO LTD), 21. Oktober 1987 (1987-10-21)

## Beschreibung

Die Erfindung betrifft eine Bremsscheibe aus Gußeisen mit Lamellengraphit (GJL) für Nutzfahrzeug-Bremsen.

Die bekannten Vorteile von Scheibenbremsen gegenüber Trommelbremsen und die immer weiter erhöhten Anforderungen an die Bremseigenschaften von leichten und schweren Nutzfahrzeugen haben dazu geführt, daß nicht nur Personenkraftfahrzeuge, sondern auch Nutzfahrzeuge im zunehmenden Umfang mit Scheibenbremsen ausgerüstet werden. Dabei sind die Belastungen, denen Nutzfahrzeug-Bremsscheiben unterworfen werden, höher als die Belastungen, welchen PKW-Bremsscheiben standhalten müssen. So sind bei Nutzfahrzeugen aufgrund des höheren Gewichts des Fahrzeugs und der transportierten Last die bei einem Bremsvorgang aufzubringenden Kräfte sehr viel größer als bei einem PKW.

Zudem wiederholen sich bei einem Nutzfahrzeug die Bremsvorgänge häufig. So werden insbesondere die Bremsen solcher leichteren Nutzfahrzeuge, die als Lieferfahrzeuge im Nahverkehr eingesetzt werden, häufig wechselnden Belastungen unterworfen.

Hinzukommt, daß unter Berücksichtigung des Aufwandes, den der Wechsel einer verbrauchten Bremsscheibe bei einem Nutzfahrzeug in der Praxis mit sich bringt, auch aus wirtschaftlichen Gründen die an die Verschleißbeständigkeit, die Thermoschockbeständigkeit und die Wärmeleitfähigkeit von Nutzfahrzeug-Bremsscheiben gestellten Anforderungen immer höher werden. So gilt derzeit für an Nutzfahrzeugen eingesetzten Bremsscheiben die Forderung nach einer Standzeit von mindestens einer Millionen Kilometer. Es hat sich gezeigt, daß die an Nutzfahrzeug-Bremsscheiben gestellten Anforderungen von den bisher zum Einsatz gekommenen Gußeisen-Qualitäten nicht befriedigend erfüllt werden können.

Aus der deutschen Offenlegungsschrift DE 38 15 832 A1 ist eine Legierung für Bremsscheiben von Fahrzeugen bekannt, welche 2,3 bis 3,0 Gew.-% Silizium, 1,0 bis 3,0 Gew.-% Mangan, 0,2 bis 1,0 Gew.-% Chrom, bis zu 2,0 Gew.-% Kupfer und 3,7 bis 4,2 Gew.-% Kohlenstoff sowie als Rest Eisen und unvermeidbare Verunreinigungen aufweist. Die aus dieser Legierung hergestellten Bremsscheiben sollen eine erhöhte Geräuschdämpfung aufweisen. In der praktischen Erprobung zeigt sich jedoch, daß derartige Bremsscheiben den an sie im Nutzfahrzeug-Betrieb gestellten thermischen Anforderungen nicht gewachsen sind.

Aus der japanischen Offenlegungsschrift 04-27 25 22 ist des weiteren eine Zusammensetzung einer Bremsscheibe bekannt, die 3,2 bis 4,0 Gew.-% Kohlenstoff, 2,3 bis 3,7 Gew.-% Aluminium, 0,5 bis 1,0 Gew.-% Mangan, 0,1 bis 1,0 Gew.-% Silizium, bis zu 0,015 Gew.-% Phosphor und bis zu 0,1 Gew.-% Schwefel enthält. Aufgrund der hohen Summe der Gehalte an Aluminium und Silizium weist die bekannte Bremsscheibe eine hohe Hitzebeständigkeit auf. Allerdings hat sich gezeigt, daß auch aus dieser Gußlegierung hergestellte Bremsscheiben unter den bei Nutzfahrzeugen gegebenen Betriebsbedingungen die an die Lebensdauer und das Verschleißverhalten der Nutzfahrzeug-Bremsscheiben gestellten Anforderungen nicht erfüllen.

Der Erfindung liegt die Aufgabe zugrunde, eine für Nutzfahrzeuge geeignete, aus Gußeisen hergestellte Bremsscheibe zu schaffen, welche eine gegenüber dem Stand der Technik verlängerte Standzeit aufweist.

Diese Aufgabe wird gemäß der Erfindung durch eine Bremsscheibe der eingangs angegebenen Art gelöst, welche aus Gußeisen mit Lamellengraphit hergestellt ist und aus (in Masse-%) 3,9 - 4,2 % Kohlenstoff, 0,7 - 1,2 % Silizium, ≤0,02 % Phosphor, ≤ 0,02 % Schwefel, ≤ 0,05 % Aluminium, wahlweise einem oder mehreren der Legierungselemente Mn, V, Cu, Mo, Cr mit einem Anteil von insgesamt maximal 1,6 Masse-%, und als Rest Eisen, einschließlich unvermeidbarer Verunreinigungen, besteht. Alternativ zu einer Begrenzung des S-Gehaltes auf höchstens 0,02 Masse-% kann der Schwefelgehalt auch 0,03 Masse-% betragen.

Das erfindungsgemäß verwendete GJL (Grauguß mit Lamellengraphit) ist einerseits gekennzeichnet durch einen im Bereich des Eutektikums liegenden eng begrenzten Gehaltsbereich für Kohlenstoff. Andererseits ist der Silizium-Gehalt im Hinblick auf die Wärmeleitfähigkeit des Graugußmaterials optimiert. Durch den hohen Kohlenstoff-Gehalt bei gleichzeitig niedrigem Silizium-Gehalt wird eine maximale Graphitisierung erreicht, indem das in der Legierung enthaltene Silizium als Graphitisierungselement und als Keimbildner die Ausscheidung von eutektischem Graphit bewirkt. Auf diese Weise besitzt die erfindungsgemäße Bremsscheibe eine besonders hohe Wärmeleitfähigkeit und eine besonders gute Zähigkeit bei gleichzeitig optimaler Verschleißbeständigkeit. Zusätzlich verbessert wird die Wärmeleitfähigkeit durch die Minimierung des Aluminium-Gehalts. Durch die hohe Wärmeleitfähigkeit des zu ihrer Herstellung verwendeten Werkstoffs ist eine erfindungsgemäß ausgebildete Bremsscheibe in der Lage, die hohen Belastungen die im Alltagsbetrieb eines Nutzfahrzeuges auftreten, über einen gegenüber herkömmlichen Bremsscheiben entscheidend verlängerten Zeitraum zu bewältigen.

Dabei ist durch den begrenzten Silizium-Gehalt einer erfindungsgemäß verwendeten Gußlegierung dem Umstand Rechnung getragen, daß an Nutzfahrzeugen eingesetzte Bremsscheiben wesentlich stärker dimensioniert sind und infolgedessen nach dem Gießen langsamer erstarren als beispielsweise PKW-Bremsscheiben, die eine wesentlich geringere Masse besitzen. So erstarren Nutzfahrzeug-Bremsscheiben, welche unter Verwendung der erfindungsgemäß zu diesem Zweck vorgesehenen Graugußlegierung gegossen worden sind, gerade noch grau, während PKW-Bremscheiben aus derselben Legierung weiß erstarren und als solche unbrauchbar sind.

Die wahlweise bis zu einem Gesamtgehalt von 1,6 Masse-% zugegebenen Legierungsbestandteile können eingesetzt werden, um beispielsweise die Kriechfestigkeit zu erhöhen.

Bei solchen Bremsscheiben, die an besonders schwer belasteten Nutzfahrzeugen eingesetzt werden und die infolgedessen eine besonders gute Wärmeleitfähigkeit bei gleichzeitig großer Masse aufweisen müssen, ist es günstig, wenn der Si-Gehalt zwischen 0,7 und 1,0 Masse-% beträgt.

Bei geringeren Belastungen und einer entsprechend geringeren Dimensionierung der Bremsscheibe sollte, um die gewünschte Ausbildung des Graugußgefüges zu gewährleisten, der Si-Gehalt zwischen 1,0 und 1,2 Masse-% liegen.

Zur Ermittlung der thermischen Eigenschaften und der Verschleißbeständigkeit von erfindungsgemäßen Bremsscheiben sind Versuche auf einem "Reziprok-Prüfstand" durchgeführt worden. Auf einem solchen Prüfstand wird ein aus einer Gußlegierung erzeugtes Prüfstück gegen einen sich bewegenden Reibbelag gedrückt. Auf diese Weise können Einflüsse der Geometrie des jeweiligen Prüfstücks auf das Untersuchungsergebnis ausgeschlossen werden und man erhält Prüfergebnisse, die miteinander ohne weiteres verglichen werden können.

Die auf dem "Reziprok-Prüfstand" durchgeführten Versuche haben ergeben, daß erfindungsgemäß erzeugte Bremsscheiben eine Lebenserwartung von mehr als einer Million Kilometer besitzen. Die Thermoschockbeständigkeit der erfindungsgemäßen Bremsscheiben konnte gegenüber Bremsscheiben, die aus herkömmlicherweise zu diesem Zweck verwendeten Legierungen hergestellt sind, um bis zu 500 % gesteigert und der Verschleiß gegenüber den aus bekannten Serienwerkstoffen hergestellten Scheiben um bis 80 % vermindert werden.

Nachfolgend wird die Erfindung anhand einer ein Ausführungsbeispiel darstellenden Zeichnung näher erläutert. Es zeigen:

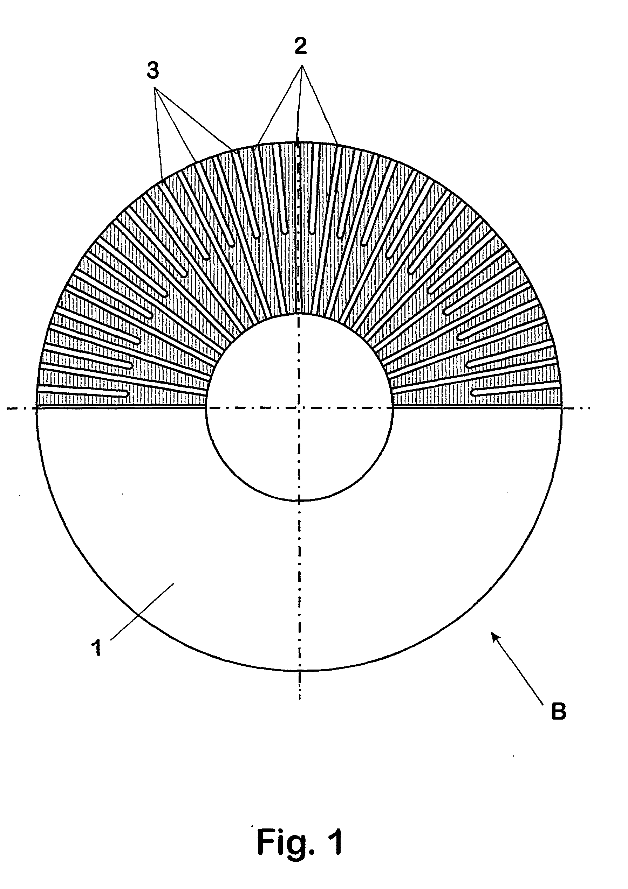

- Fig. 1: eine innenbelüftete Bremsscheibe in einer teilweise aufgebrochenen frontalen Ansicht;

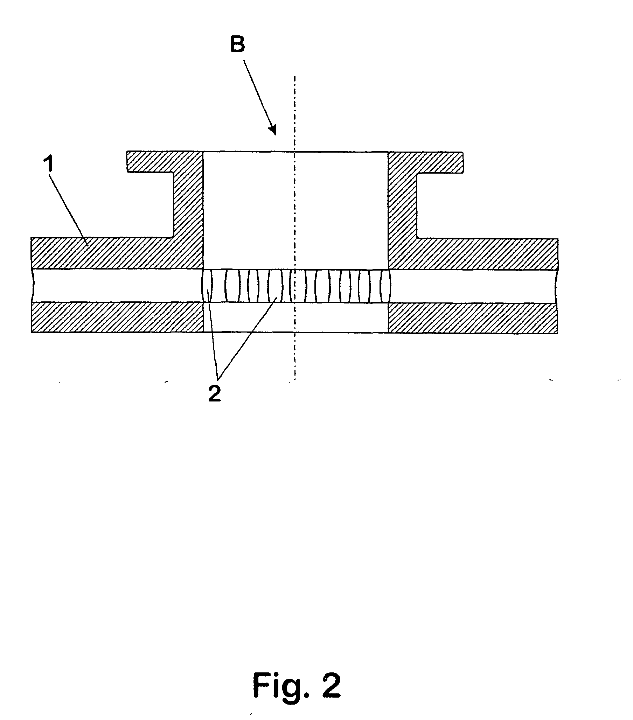

- Fig. 2: die Bremsscheibe in einem Längsschnitt.

Die in den Figuren dargestellte, innenbelüftete Bremsscheibe B wird typischerweise für schwere Nutzfahrzeuge eingesetzt. Sie besitzt einen Bremsring 1, in den radiale Durchgangsbohrungen 2 zur Belüftung und Sacklochbohrungen 3 zur Gewichtsreduzierung eingeformt sind.

Die Bremsscheibe B ist aus einer Graugußlegierung gegossen, deren erfindungsgemäß zu verwendende Zusammensetzung in der zweiten Spalte der nachfolgend dargestellten Tabelle angegeben ist.

Zu dieser Bremsscheibe sind auf einem Bremsscheiben-Prüfstand die Standzeiten ermittelt worden, die bei Durchlauf eines bestimmten Betriebszyklusses bis zum Durchriß der Scheibe erreicht werden.

Zusätzlich sind auf dem "Reziprok-Prüfstand" die thermischen Eigenschaften und das Verschleißverhalten an einem aus der Legierung hergestellten Prüfstück definierter Abmessung ermittelt worden.

Die Ergebnisse, die an der aus erfindungsgemäß zu verwendender Graugußlegierung hergestellten Bremsscheibe und dem ebenso erzeugten Prüfstück gewonnen wurden, wurden mit den Ergebnissen verglichen, die für eine aus einer herkömmlichen Gußlegierung hergestellten Bremsscheibe bzw. einem aus dieser Legierung erzeugten Prüfstück ermittelt worden sind. Die Zusammensetzung der zum Vergleich benutzten, herkömmlichen Graugußlegierung ist in der dritten Spalte der Tabelle angegeben.

Bei den Versuchen auf dem Bremsscheibenprüfstand zeigte sich, daß die erfindungsgemäße Bremsscheibe gegenüber einer aus herkömmlichem Grauguß erzeugten Scheibe gleicher Geometrie eine dreimal höhere Standzeit bei einem um 50 % verringerten Verschleiß besitzt.

Bei den Versuchen auf dem "Reziprok-Prüfstand" war die Standzeit des aus erfindungsgemäß zu verwendender Legierung hergestellten Prüfstücks fünfmal größer als die Standzeit eines aus der herkömmlicherweise verwendeten Legierung erzeugten Prüfstücks. Gleichzeitig war der Verschleiß des erfindungsgemäß beschaffenen Prüfstücks um 80 % geringer als der Verschleiß des Prüfstücks, zu dessen Herstellung die herkömmliche Legierung verwendet worden ist.

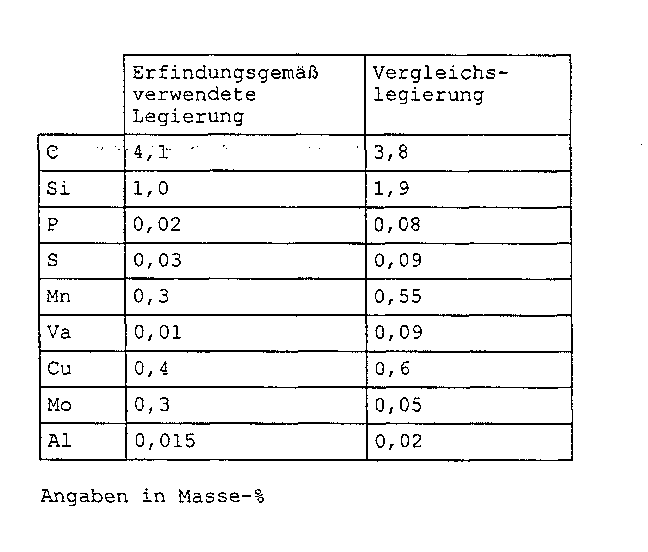

## Patentansprüche

1. Bremsscheibe für Nutzfahrzeugbremsen, die aus Gußeisen mit Lamellengraphit (GGL) hergestellt ist und aus (in Masse-%)
| | |
|---|---|
| C | 3,9 - 4,2 %, |
| Si | 0,7 - 1,2 %, |
| P | ≤ 0,02 %, |
| S | ≤ 0,02 % oder S = 0,03 %, |
| Al | ≤ 0,05 %, |
wahlweise einem oder mehreren der
Legierungselemente Mn, V, Cu, Mo, Cr mit einem Anteil von insgesamt maximal 1,6 Masse-%, und als Rest Eisen, einschließlich unvermeidbarer Verunreinigungen,
besteht.

2. Bremsscheibe nach Anspruch 1, **dadurch gekennzeichnet, daß** der Si-Gehalt zwischen 0,7 und 1,0 Masse-% beträgt.

3. Bremsscheibe nach Anspruch 1, **dadurch gekennzeichnet, daß** der Si-Gehalt zwischen 1,0 und 1,2 Masse-% beträgt.

4. Bremsscheibe nach einem der voranstehenden Ansprüche, **dadurch gekennzeichnet, daß** sie belüftet ist.

## Claims

1. A brake disc for utility vehicle brakes which is manufactured from cast iron with lamellar graphite (GGL) and consists of (in % by mass)
| | |
|---|---|
| C | 3.9 - 4.2 %, |
| Si | 0.7 - 1.2 %, |
| P | ≤ 0.02 %, |
| S | ≤ 0.02 % or S = 0.03 %, |
| Al | ≤ 0.05 %, |
optionally one or several of the alloy elements Mn, V, Cu, Mo, Cr with an overall maximum content of 1.6 % by mass, and the remainder being iron including the unavoidable impurities.

2. The brake disc according to claim 1, **characterised in that** the Si-content lies between 0.7 and 1.0 % by mass.

3. The brake disc according to claim 1, **characterised in that** the Si-content lies between 1.0 and 1.2 % by mass.

4. The brake disc according to one of the preceding claims, **characterised in that** it is ventilated.

## Revendications

1. Disque de frein pour freins de véhicules utilitaires, qui est réalisé en fonte à graphite lamellaire (GGL) et constitué (en % en masse) par
| | |
|---|---|
| C | 3,9 à 4,2 % |
| Si | 0,7 à 1,2 % |
| P | ≤0,02 % |
| S | ≤0,02 % ou S = 0,03 % |
| A | ≤0,05 % |
au choix un ou plusieurs des éléments d'alliage Mn, V, Cu, Mo, Cr avec un pourcentage égal globalement au maximum à 1,6 % en masse, et le reste étant formé de fer, y compris d'inévitables impuretés.

2. Disque de frein selon la revendication 1, **caractérisé en ce que** la teneur en Si est comprise entre 0,7 et 1,0 % en masse.

3. Disque de frein selon la revendication 1, **caractérisé en ce que** la teneur en Si est comprise entre 1,0 et 1,2 % en masse.

4. Disque de frein selon l'une des revendications précédentes, **caractérisé en ce qu'**il est aéré.
